# EUROPÄISCHE PATENTSCHRIFT

(11) **EP 4 214 545 B1**
(45) Veröffentlichungstag und Bekanntmachung des Hinweises auf die Patenterteilung: **06.11.2024**
(21) Anmeldenummer: 21778018.8
(22) Anmeldetag: 16.09.2021
(51) Int. Cl.: G01S 13/72, G06T 7/215

(54) **CLUSTERUNG VON DETEKTIONEN**
CLUSTERING DETECTIONS
REGROUPEMENT DE DÉTECTIONS

(30) Priorität: 17.09.2020 DE 102020211678
(43) Veröffentlichungstag der Anmeldung: 26.07.2023
(73) Patentinhaber: Fraunhofer-Gesellschaft zur Förderung der angewandten Forschung e.V., 80686 München (DE)
(72) Erfinder: HERSCHEL, Reinhold, 53343 Wachtberg (DE); ELGER, Gordon, 01069 Dresden (DE); WALLRATH, Patrick, 53343 Wachtberg (DE); THINDLU RUDRAPPA, Manjunath, 53343 Wachtberg (DE)
(74) Vertreter: Pfitzner, Hannes
(86) Internationale Anmeldenummer: PCT/EP2021/075414
(87) Internationale Veröffentlichungsnummer: WO 2022/058399

(56) Entgegenhaltungen:
- DE-A1- 102017 220 506
- CABANES YANN ET AL: "Matrix Extension for Pathological Radar Clutter Machine Learning", 19 June 2020 (2020-06-19), XP055881544, Retrieved from the Internet <URL:https://hal.archives-ouvertes.fr/hal-02875440/document> [retrieved on 20220120]
- SONG M (J) ET AL: "A spike sorting framework using nonparametric detection and incremental clustering", NEUROCOMPUTING, ELSEVIER, AMSTERDAM, NL, vol. 69, no. 10-12, 1 June 2006 (2006-06-01), pages 1380 - 1384, XP027970611, ISSN: 0925-2312, [retrieved on 20060601]
- DAVID HALLAC ET AL: "Toeplitz Inverse Covariance-Based Clustering of Multivariate Time Series Data", ARXIV.ORG, CORNELL UNIVERSITY LIBRARY, 201 OLIN LIBRARY CORNELL UNIVERSITY ITHACA, NY 14853, 10 June 2017 (2017-06-10), XP080768857, DOI: 10.1145/3097983.3098060

## Beschreibung

Ausführungsbeispiele der vorliegenden Erfindung beziehen sich auf ein Verfahren zur Clusterung von Detektionen sowie auf ein Verfahren zur Detektion eines Objekts. Weitere Ausführungsbeispiele beziehen sich auf ein Computerprogramm zur Durchführung eines der genannten Verfahren. Weitere Ausführungsbeispiele beziehen sich auf eine Berechnungseinheit zum Clustern von Detektionen sowie auf ein Radarsystem.

Bei der Radar-basierten Erfassung von Objekten hängt das Auflösevermögen hinsichtlich des Blickwinkels von der Größe der Antennenapertur ab. Damit können bei kompakten Radarsensoren bislang nur Objekte voneinander getrennt werden, die räumlich deutlich voneinander separiert sind. Dies gilt insbesondere für Gruppen von Personen, die von einem integrierten Radarmodul, wie es derzeit eingesetzt wird, nur als ein einziges Cluster erkannt werden. Eine Separierung der Personen voneinander und von anderen Objekten im unmittelbaren Umfeld ist nicht möglich.

Bei der Clusterung gibt es momentan einen Hauptansatz. Es werden alle Detektionen im Bild verwendet, die einen bestimmten Abstand zueinander unterschreiten. Dieser Abstand und damit die räumliche Größe des Clusters werden durch eine zeitliche Standardabweichung der einzelnen Detektion skaliert. Hierbei können beispielsweise Standardabweichungen aus der Kovarianzmatrix der Signale berechnet werden. Diese auf die mittlere zeitliche Schwankung normierte euklidische Distanz heißt Mahalanobis-Abstand. Es wird somit der effektive Abstand von zeitlich schwankenden Punktwolken betrachtet. Hierbei werden die einzelnen Verläufe jedoch nicht in Beziehung gesetzt. Die Normalisierung erfolgt nur aufgrund der Streuung (bzw. der Varianz) des jeweils einzelnen Verlaufs über die Zeit. Somit wird bislang ausschließlich der Abstand und die statistische Schwankung der Detektionen in die Zusammenführung von Detektionen in einen Cluster einbezogen. Eine räumliche Trennung von überlappenden, sich bewegenden Objekten ist nicht möglich. Stand der Technik formt beispielsweise die Veröffentlichung mit dem Titel Matrix Extension for Pathological Radar Clutter Machine Learning. Darüber hinaus ist auch noch auf die DE 102017220506 A1 sowie die Veröffentlichung mit dem Titel "A spike sorting framework using nonparametric detection and incremental clustering" und "Toeplitz Inversing Covariance-Based Clustering of Multivariate Time Series Data" hinzuweisen. Deshalb besteht der Bedarf nach einem verbesserten Ansatz.

Aufgabe der vorliegenden Erfindung ist es, ein Konzept für die Detektion bzw. Clusterung von Detektionen zu schaffen, das eine verbesserte Separierbarkeit von einzelnen Objekten ermöglicht.

Die Aufgabe wird durch die unabhängigen Patentansprüche gelöst.

Ausführungsbeispiele der vorliegenden Erfindung schaffen ein Verfahren zur Clusterung von Detektionen, z. B. zugehörig zu einem Objekt / einer erkannten Person oder einer sich zusammen bewegenden Personengruppe. Das Verfahren umfasst die folgenden Schritte:
- Erhalten einer Mehrzahl von Frames, z. B. Bilder bzw. Radardaten/Bilder zurückgehörig zu aufeinanderfolgenden Zeitpunkten. Jedes Frame umfasst eine Vielzahl von Detektion, wie Radar-Detektionen. Hierbei wird z.B. ein Objekt A an einer ersten Position in einem ersten Frame erkannt und die Positionen über die nachfolgenden 2, 3, 4 oder mehr Frames getrackt. Das entspricht Detektion des Objekts A über mehrere Frames. In den gleichen Frames kann auch ein Objekt B (zugehörig zu Detektion des Objekts B). Die Messung kann dabei ein-, zwei- oder auch in mehr Dimensionen stattfinden.
- Erkennen einer (paarweisen) Kovarianz eines zeitlichen Verlaufes über zeitlich aufeinanderfolgende als zusammengehörig erkannte Sensorwerte (Reflexionswerte) zugehörig zu der Vielzahl von Detektionen (z.B. Detektion des Paares Objekt A zu Objekt B), um je Paar von zeitlichen Verläufen einen Kovarianzwert zu erhalten. Dieser Kovarianzwert gibt beispielsweise an, inwieweit eine statistische Schwankung, z. B. bezüglich der bestimmten Position der Detektion / des Bildvoxels einer statistischen Schwankung bezüglich der Position einer weiteren Detektion / eines weiteren Bildvoxels, z. B. eines benachbarten Bildvoxels ähnelt.
- Clustern des Paares / der Gruppe von Detektionen, bei welchen der zeitliche Verlauf des Kovarianzwertes des Paares / der Gruppe von Sensorwerten einem vorgegebenen Muster entsprechen. Entsprechend Ausführungsbeispielen kann das vorgegebene Muster durch vorgegebene Schwellenwerte für den Kovarianzwert definiert sein. Beispielsweise wäre es denkbar, dass ein positiver Schwellenwert und insbesondere ein hoher Schwellenwert vorgegeben ist (eine positive Kovarianz gibt einen monotonen Zusammenhang an). Entsprechend Ausführungsbeispielen werden Detektionen zu einem Cluster zusammengefasst, wenn der Kovarianzwert für die entsprechenden Detektionen oberhalb eines vordefinierten Schwellenwerts liegt. Das Prinzip ist auf beispielsweise zwei Detektionen, die miteinander in Beziehung gesetzt werden, aber auch auf mehr als zwei Detektionen anwendbar. Entsprechend weiteren Ausführungsbeispielen kann das Muster durch eine maximale Schwankungsbreite in Bezug auf den Kovarianzwert definiert sein. Wenn man also beispielsweise von drei Detektionen in einem Paar / in einer Gruppe ausgeht und feststellt, dass sich die Kovarianzwerte der Detektionen zueinander über die Zeit ähnlich verhalten, das heißt im Wesentlichen gleichmäßig schwanken, kann dieses Kriterium erfüllt sein. Ein gleichmäßiges Schwanken kann beispielsweise aufgrund von gleichmäßigen Bewegungen mehrerer Fußgänger oder gleichförmigen Treten von mehreren Fahrradfahrern herrühren. Entsprechend Ausführungsbeispielen werden Detektionen zu einem Cluster geclustert, wenn die Kovarianzwerte innerhalb der (vorgegebenen) Schwankungsbreite liegen. Ein Hin- und Herschwanken von mehreren Fahrradfahrern führt zwar zu geringen Kovarianzwerten, aber immernoch zu Kovarianzwerten innerhalb einer vorbestimmten Schwankungsbreite.
   Wie oben bereits erläutert, können unterschiedliche Detektionen zu einem Cluster zugeordnet werden, auch wenn die Varianzwerte nicht in jedem Time Frame auf ein Maximum hindeuten. Kriterium für die Auswertung ist eine sogenannte "Schwankungsbereite", die sozusagen ein Confidence Intervall über mehrere Time Frames, bevorzugt mehr als drei Time Frames, angibt. Diese Schwankungsbreite ermöglicht das Clustern von Objekten, die grundsätzlich eine gleiche und vor allem gleichförmige Bewegungsrichtung haben, auch wenn die Bewegung nicht identisch ist. Beispielsweise können zwei hin- und herschwankende Fahrradfahrer einem gemeinsamen Cluster zugeordnet werden, deren Mikrobewegungen nicht gleichorientiert sind, aber gleichförmig sind und vor allem durch eine gleichorientierte Makrobewegung überlagert wird. Ein ähnliches Beispiel hierfür ist ein Fußgänger, der vielleicht anhand mehrerer Bildpunkte erkannt wird. Bei Nichtgleichschritt von zwei Fußgängern würde der Kovarianzwert bei den Kniepositionen stark schwanken, d. h. zeitweise niedriger sein, wobei diese Kovarianzwerte dann aber links in einer gewissen Schwankungsbreite liegen und weitere zugehörige Detektionen, z. B. der Detektionen des Oberkörpers neue Kovarianzwerte aufweisen. Entsprechend einem weiteren Ausführungsbeispiel könnte als zusätzliches Kriterium auch die Frequenz der Schwankung der Kovarianzwerte mitberücksichtigt werden und Kovarianzwerte zueinander geclustert werden, die über mehrere Time Frames eine vergleichbare Frequenz aufweisen. Hintergrund ist, dass gleichförmige Bewegungen, z. B. Schrittbewegung oder Trittbewegungen sich häufig durch eine ähnliche Frequenz auszeichnen.

Ausführungsbeispielen der vorliegenden Erfindung liegt die Erkenntnis zugrunde, die zeitlichen Schwankungen der (komplexen) Detektionswerte miteinander in Beziehung zu setzen. Entsprechend Ausführungsbeispielen sind die Detektionswerte durch Detektionen / Voxel beschrieben bzw. die Position der Detektionen im Raum (bzw. in der Fläche). Es ergeben sich hohe Kovarianzen zwischen Detektionen, bei denen die (komplexen) Reflexionswerte über die Zeit korreliert schwanken. Somit ergeben sich also beispielsweise zwischen einzelnen Detektionen klare Zusammenhänge, die zur Clusterung von Detektionen verwendet werden können. Geclusterte Detektionen können beispielsweise ein Objekt repräsentieren, das sich über die Zeit bewegt. Bei dem Objekt kann es sich beispielsweise um ein Einzelobjekt, wie z. B. eine Person, aber auch um eine Personengruppe, handeln. In diesem Beispiel ist eine ähnliche Bewegung aller zu einer Person gehörenden Detektionen zu erwarten, wohingegen eine andere Person sich unabhängig von ihr, also unkorreliert, bewegt. Somit können die Detektionen der richtigen Person selbst bei starker räumlicher Überlappung zugeordnet werden. Der Vorteil dieses Ansatzes liegt darin, dass es möglich ist, überlappende, bewegte Objekte, z. B. in Radardaten voneinander zu trennen und verschiedene detektierte Reflexionspunkte dem gleichen Objekt zuzuordnen. Somit können auch Objekte voneinander differenziert werden, die nicht klar örtlich, z. B. durch eine hohe Winkelauflösung des Bildgebungssystems oder einen großen Abstand der Objekte zueinander getrennt, sind.

Bezüglich des Schrittes des Erkennens einer Kovarianz sei an dieser Stelle angemerkt, dass entsprechend Ausführungsbeispielen eine Kovarianzmatrix der Detektionen/Bildvoxel/Rückstreuwerte berechnet wird.

Entsprechend Ausführungsbeispielen wird der Kovarianzwert für zumindest zwei oder mehr Detektionen der Gruppe berechnet. Entsprechend weiteren Ausführungsbeispielen kann ebenfalls ein weiterer Kovarianzwert für Sensorwerte von zumindest zwei oder mehr Detektionen der Gruppe oder einer weiteren Gruppe berechnet werden.

Die Limitierung auf kleine Kovarianzwerte ermöglicht Detektionen, die sich z.B. grundsätzlich in gleiche Richtung bewegen, frei von Mikrobewegung bzw. Mikrodoppler zu erkennen. Entsprechend Ausführungsbeispielen kann eine Mittelwertbildung der Kovatarianzwerte über die Zeit erfolgen. Durch die Mittelwertbildung wird der Einfluss von Mikrobewegungen reduziert.

Bezüglich den Signalen je Detektion sei angemerkt, dass es sich hier um komplexe Rückstrahlwerte, z. B. ausgehend von einem Radarsystem, handeln kann. Bei Ausführungsbeispielen wird beispielsweise davon ausgegangen, dass die Vielzahl der Frames durch eine Vielzahl von Zeitfenstern definiert ist.

Entsprechend Ausführungsbeispielen weist das Verfahren den Schritt des Normierens des Kovarianzwerts auf sich selber auf. Entsprechend einem weiteren Ausführungsbeispiel weist das Verfahren den Schritt des Bestimmens einer euklidischen Distanz zwischen zumindest zwei Detektionen auf. Hierbei kann entsprechend Ausführungsbeispielen das Gruppieren bzw. das Clustern von zumindest zwei Detektionen zu einer Gruppe dann definiert sein, wenn die bestimmte euklidische Distanz kleiner als ein Schwellwert ist. Insofern erfolgt das Clustern unter der Bedingung, dass die euklidische Distanz für die zwei Detektionen entsprechend klein ist (kleiner als ein Grenzwert). Entsprechend Ausführungsbeispielen erfolgt der Schritt des Clusterns zum einen für ein erstes Cluster und entsprechend weiteren Ausführungsbeispielen auch noch zusätzlich für ein zweites Cluster. Jedes Cluster kann entsprechend Ausführungsbeispielen einem Objekt zugeordnet sein.

Somit kann entsprechend weiteren Ausführungsbeispielen das Verfahren zu einem Verfahren zur Detektion eines Objekts erweitert werden. Insofern schaffen Ausführungsbeispiele ein Verfahren zur Detektion eines Objekts mit den Schritten des Verfahrens zum Clustern sowie das Erkennen eines Clusters als ein Objekt. Dieses Verfahren kann entsprechend weiteren Ausführungsbeispielen auch einen initialen Schritt des Empfangens von Radarsignalen als Frames bzw. in Frame-Form umfassen.

Entsprechend Ausführungsbeispielen wäre es auch denkbar, dass das Verfahren Computer-implementiert ist.

Ein weiteres Ausführungsbeispiel schafft eine Berechnungseinheit mit einer Schnittstelle und einem Prozessor. Die Schnittstelle ist ausgebildet, um eine Mehrzahl von Frames (zugehörig zu aufeinanderfolgenden Zeitpunkten zu erhalten, wobei jedes Frame eine Vielzahl von Detektionen umfasst. Der Prozessor ist ausgebildet, eine Kovarianz eines zeitlichen Verlaufes über die aufeinanderfolgenden Zeitpunkten von Sensorwerten zugehörig zu der Vielzahl von Detektionen zu erkennen, um je Gruppe von Sensorwerten einen Kovarianzwert zu erhalten; und um eine Gruppe von Detektionen zu clustern, bei welchen der Kovarianzwert der Gruppe von Sensorwerten einem vorgegebenen Muster entspricht.

Ein weiteres Ausführungsbeispiel bezieht sich auf ein Radarsystem, umfassend einen Radarempfänger oder eine Radarantenne sowie eine Berechnungseinheit bzw. umfassend mehrere Sendern und Empfängern sowie eine Berechnungseinheit. Bei der zweiten Variante werden die Detektionen aus verschiedenen Messkanälen einander zugeordnet.

Ein weiteres Ausführungsbeispiel bezieht sich auf ein Fahrzeug mit einem Radarsystem.

Ausführungsbeispiele der vorliegenden Erfindung werden anhand der beiliegenden Zeichnungen erläutert. Es zeigen:
- Fig. 1a: ein schematisches Flussdiagramm eines exemplarischen Verfahrens zum Clustern gemäß einem Basisausführungsbeispiel;
- Fig. 1b: eine schematische Darstellung zur Illustration des Verfahrens zum Clustern;
- Fig. 2: ein schematisches Blockdiagramm einer Vorrichtung zum Clustern gemäß Ausführungsbeispiel; und
- Fig. 3: eine schematische Darstellung eines Radarsystems gemäß Ausführungsbeispielen.

Bevor nachfolgend Ausführungsbeispiele der vorliegenden Erfindung anhand der beiliegenden Zeichnungen erläutert werden, sei darauf hingewiesen, dass gleichwirkende Elemente und Strukturen mit gleichen Bezugszeichen versehen sind, so dass die Beschreibung derer aufeinander anwendbar bzw. austauschbar ist.

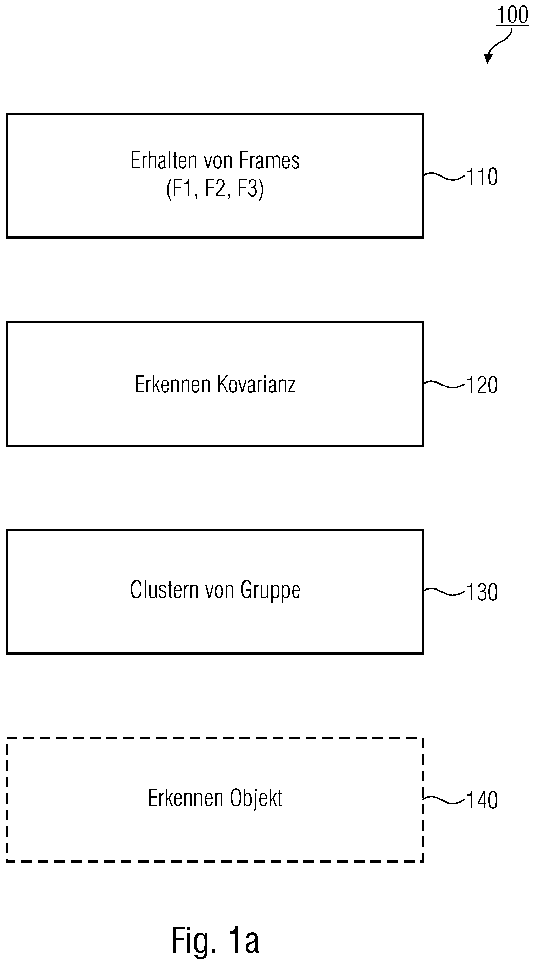

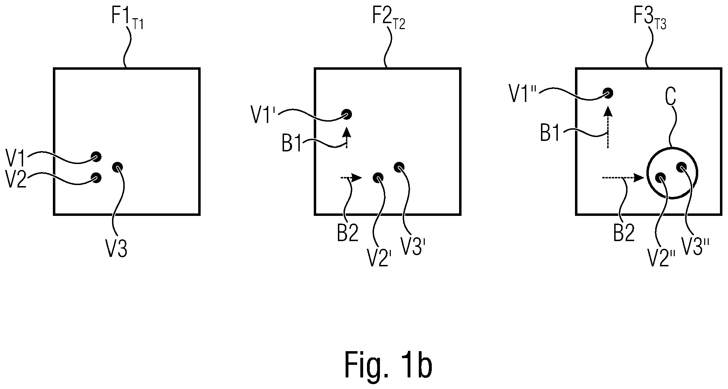

Fig. 1a zeigt ein Blockdiagramm zur Illustration des Verfahrens 100. Das Verfahren bezieht sich auf das Clustern eines Objekts und umfasst die Basisschritte 110, 120 und 130. Beim Basisschritt 110 wird eine Mehrzahl von Frames erhalten bzw. empfangen. Die Frames sind zugehörig zu aufeinanderfolgenden Zeitpunkten. Jedes Frame umfasst eine Vielzahl von Detektionen (z.B. zugeordnete Sensorwerte). Beispielsweise kann das Frame ein 2D-Bild, z. B. von einer Kamera oder Radaraufnahme oder auch ein 3D-Bild, z. B. ausgehend von einer Radaraufnahme, umfassen. Je nachdem, wie der Winkelbereich von den verwendeten Radarantennen ist, ergibt sich eine Ortsauflösung. Drei exemplarische Frames F1, F2 und F3 für die unterschiedlichen Zeitpunkte T1, T2 und T3 sind in Fig. 1b dargestellt.

Jedes Frame F1, F2 und F3 umfasst eine Vielzahl von Detektionen V1, V2 und V3. In Fig. 1b ist ein zweidimensionaler Raum dargestellt, wobei selbstverständlich die Detektion bzw. das Bildvoxel auch in einem dreidimensionalen Raum angeordnet sein kann.

Die Detektionen V1, V2 und V3 sind recht nahe beieinander, so dass je nach Auflösung unter Berücksichtigung einer gewissen Standardabweichung die Zugehörigkeit dieser Detektionen schwierig zu erkennen ist. Umso besser die Ortsauflösung des Radarsystems bzw. bildgebenden Systems ist, umso besser ist die Zuordnung der Voxel zueinander zu erkennen, wobei nachfolgend ein Ansatz beschrieben wird, der es auch ausgehend von nicht optimalen Ortsauflösungen ermöglicht, zusammengehörige Detektionen V1, V2 und V3 zu clustern.

In dem nächsten Basisschritt 120 wird die Kovarianz des zeitlichen Verlaufs der Vielzahl von Detektionen beurteilt. Das erfolgt, indem eine Kovarianz über den zeitlichen Verlauf der Vielzahl von Detektionen V1, V2 und V3 bzw. über die Zeit, das heißt also von Frame 1 zu Frame 2 zu Frame 3 ermittelt wird. Das Ermitteln erfolgt beispielsweise wie folgt: die zeitliche Schwankung der komplexen Detektionswerte werden miteinander in Beziehung gesetzt. Hierzu können beispielsweise die Detektionen und verschiedenen Detektionen über die Zeit (Slow Time) miteinander korreliert werden. Eine Variante wäre die Wahl über die Berechnung der Kovarianzmatrix der komplexen Rückstreuwerte aller Detektionen aufeinanderfolgende Messungen F1, F2 und F3 innerhalb eines vordefinierten Zeitfensters T1-T3. Es ergeben sich hohe Kovarianzen zwischen Detektionen V2 und V3 (vgl. V3 und V2' bzw. V3" und V2"). Wie zu erkennen ist, bewegen sich diese zwei Detektionen V2, V2', V2" und V3, V3' und V3" parallel zueinander in Richtung B2, das heißt also sie haben hohe Kovarianzen. Das gilt insbesondere im Vergleich zu der Detektion V1, die sich in eine andere Richtung B1 (vgl. V1` und V1") bewegt. Mit Pfeilen sind die jeweiligen Bewegungsrichtungen dargestellt. Durch die Ermittlung dieser Kovarianzen zwischen den einzelnen Detektionen V1 gegenüber V2 bzw. gegenüber V3 und V2 gegenüber V3 können klare Zusammenhänge zwischen einzelnen Detektionen erkannt werden. Das erfolgt beispielsweise mit einem Kovarianzwert. Wenn diese positiv bzw. umso höher der ist, umso höhere Kovarianzen liegen vor.

Entsprechend einer Variante wäre es nun ausgehend von hohen Kovarianzwerten bzw. ausreichend hohen Kovarianzwerten Detektionen, z. B. V2 und V3 bzw. V2' und V3' bzw. V2" und V3" zueinander (paarweise) zu einem Cluster C zusammenzufassen. Das erfolgt in dem Schritt 130.

Physikalisch gesprochen werden Bildbereiche C geclustert, die eine gemeinsame Bewegungskomponente B2 haben. Wenn man beispielsweise davon ausgeht, dass jede Detektion V1, V2 und V3 eine Abbildung von zwei Personen darstellt, die sich individuell bewegen, ermöglicht das hier beschriebene Verfahren diese zwei Personen, die zumindest zum Zeitpunkt T1 eine sich kreuzende Bewegungsbahn haben, gut voneinander zu separieren. Die zeitliche Kovarianz zwischen zu unterschiedlichen Personen gehörenden Detektionen ist beispielsweise gering (vgl. V1' vs. V2` bzw. V3`). Detektion V2' bzw. V3' hingegen, die zur gleichen Person gehören, zeigen stark korrelierende Bewegungskomponenten. Diese werden zu einem Cluster C zusammengeordnet. Selbst wenn sich einzelne Personen im Bild überlappen (vgl. Frame 1, T1) ist eine Zuordnung der Detektionen V1, V2 und V3 zu unterschiedlichen Personen möglich.

Entsprechend einem Ausführungsbeispiel kann bei bewegten Objekten das Verfahren derart übertragen werden, dass entweder das Zeitfenster der Kovarianzbildung kurz genug für eine quasi-statische Betrachtung gewählt wird oder die Detektion durch Tracking-Filter örtlich verfolgt wird. Die Kovarianzbestimmung wird entlang des Tracks (vgl. B1 bzw. B2) anstatt nur an einer einzigen Voxel-Position durchgeführt. Entsprechend Ausführungsbeispielen kann aus den Clustern die gemeinsame zeitlich veränderliche Bewegung B1 bzw. B2 dann durch eine Hauptkomponentenanalyse über all dem Cluster C zugeordneten Verläufen extrahiert werden.

Entsprechend Ausführungsbeispielen kann das oben erläuterte Verfahren durch Zwischenschritte optimiert werden. Eine Option wäre, dass die Kovarianzwerte auf die Varianz des zeitlichen Verlaufs T1-T3 der Reflexionswerte selbst normiert werden.

Entsprechend einem Ausführungsbeispiel wäre es auch denkbar, dass die euklidische Distanz (der räumliche Abstand) zwischen den Voxeln V1, V2 und V3 miteinbezogen wird. Im Gegensatz zum Mahalanobis-Abstand werden Cluster nicht aus der Detektion mit kleinem Abstand und kleiner Kovarianz gebildet, sondern aus Clustern zur Detektion mit möglichst hoher Kovarianz untereinander erstellt.

Entsprechend einem weiteren Ausführungsbeispiel kann nach der Clusterung auch noch ein optionaler Schritt 140 des Erkennens eines Objekts, z. B. einer Person bzw. Personengruppe in dem Cluster C, erfolgen. Hierbei ist es entsprechend Ausführungsbeispielen auch denkbar, dass anhand der zeitlich veränderlichen Bewegung, z. B. B2 für das Cluster bestimmt und eine Information darüber extrahiert wird.

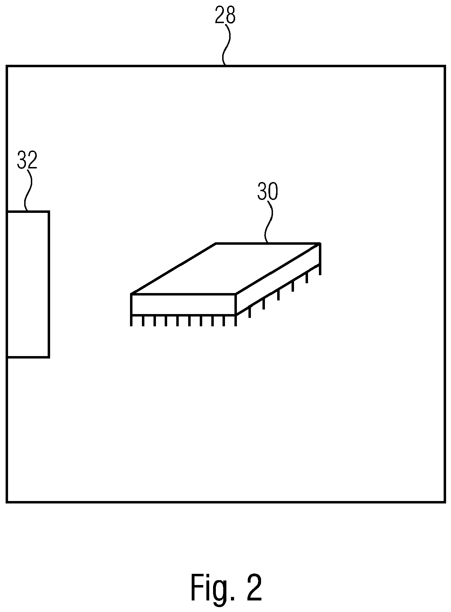

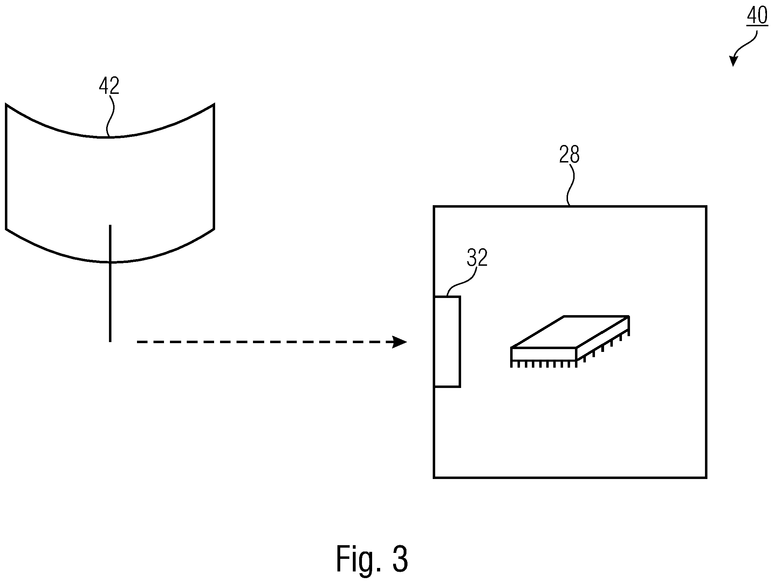

Fig. 2 zeigt eine Implementierung der Erfindung in Hardware 28. Die Hardware umfasst einen Prozessor 30 und eine mit dem Prozessor verbundene Schnittstelle 32. Über die Schnittstelle werden die einzelnen Frames, Radarsignale bzw. Voxelbilder über die Zeit empfangen. Diese werden dann von dem Prozessor entsprechend verarbeitet. Der Prozessor 30 führt insbesondere die Schritte Erkennen der Kovarianz bzw. Berechnen der Kovarianz und Clustern durch. Optional kann der Prozessor 30 natürlich auch noch die Analyse durchführen. Wie oben erläutert, ist ein Anwendungsgebiet die Radardetektion. Ein entsprechendes Radarsystem 40 mit einer Antenne 42 und einer Berechnungseinheit 28 (vgl. Fig. 2) ist in Fig. 3 dargestellt. Mit der Antenne 42 werden die Radarsignale empfangen, die dann über eine Schnittstelle 32 dem Prozessor 30 zugeführt werden. Selbstverständlich wäre es auch denkbar, dass mehrere Radarantennen verwendet werden.

Auch weitere Anwendungen sind möglich, wie z. B. die Ultraschalldetektion. Im Allgemeinen ist das oben erläuterte Prinzip auf alle kohärenten Detektionsverfahren vorteilhafterweise anwendbar. Die Vorteile bestehen insbesondere in der klaren Trennung von sich teilweise überlappenden bewegten Objekten, ohne die Winkelauflösung des Systems durch größere Antennenapparatur oder Fusion mehrerer örtlich verteilter Sensoren zu vergrößern. Auch ist ein möglicher Eingriff in die Szene durch individuelle Marker Vermeidbar. Insofern wird ein System zur markerfreien Unterscheidung von bewegten Objekten geschaffen. Anwendungsgebiete derartiger Systeme sind das autonome Fahren, die Absicherung für die Infrastruktur, Sicherheitsportale, Personenerkennung, Mensch-Maschinen-Interaktion.

An dieser Stelle sein angemerkt, dass oben allgemein von Detektionen gesprochen wird, da es egal ist, ob es sich um ein reines Entfernungsprofil oder tatsächlich eine 3D-Punktwolke handelt. Komplexe Werte über die Zeit kann man unabhängig vom Raum (2D, 3D) erfassen und clustern.

Daraus ergibt sich die Möglichkeit auch über mehrere Einzelsensoren zu clustern, z.B. indem mit mehreren örtlich verteilten Radarsensoren nach verschütteten Personen gesucht wird. Hierbei werden die Entfernungsprofile jedes Sensors (um Mehrflexionen mit zu nutzen) geclustert, wobei das clustern sensorübergreifend (also über mehrere Entfernungsprofile hinweg) erfolgt, was uns eine Triangulation ermöglicht. Eine 3D-Bildgebung erfolgt aber nicht zwingen, lediglich eine Lokalisierung.

Ferner wird beim Begriff Detektion, neben dem erläuterten 2D-Fall auch das Szenario mit 3D-Voxeln abgedeckt.

Bei obigen Ausführungsbeispielen wurde immer von Radar gesprochen. Entsprechend weiteren Ausführungsbeispielen ist das erläuterte Prinzip auf weitere Messprinzipien, z.B. auf Ultraschallbasis oder IR-Basis erweiterbar.

Die Basiskonfiguration von Ausführungsbeispielen umfasst folgenden Verfahrensschritte:
- Erhalten einer Mehrzahl von Frames zugehörig zu aufeinanderfolgenden Zeitpunkten, wobei jedes Frame eine Vielzahl von Detektionen umfasst;
- Erkennen einer paarweisen Kovarianz von zwei Detektionen der Vielzahl von Detektionen über die aufeinanderfolgenden Zeitpunkte um für die jeweils zwei Detektionen über die aufeinanderfolgenden Zeitpunkte einen Kovarianzwert zu erhalten;
- Clustern von Paaren von Detektionen, bei welchen der Kovarianzwert der jeweiligen Paare einem vorgegebenen Muster entspricht.

Dieses Verfahren kann wie folgt in Hardware implementiert sein. Diese Hardware umfasst eine Berechnungseinheit zum Clustern von Objekten mit einer Schnittstelle und einem Prozessor. Die Schnittstelle ausgebildet ist, um eine Mehrzahl von Frames zugehörig zu aufeinanderfolgenden Zeitpunkten zu erhalten, wobei jedes Frame eine Vielzahl von Detektionen umfasst. Der Prozessor ist ausgebildet, eine paarweise Kovarianz von zwei Detektionen der Vielzahl von Detektionen über die aufeinanderfolgenden Zeitpunkte zu erkennen, um für die jeweils zwei Detektionen über die aufeinanderfolgenden Zeitpunkte einen Kovarianzwert zu erhalten; und Detektionen zu clustern, bei welchen der paarweise Kovarianzwert untereinander einem vorgegebenen Muster entsprechen.

Obwohl manche Aspekte im Zusammenhang mit einer Vorrichtung beschrieben wurden, versteht es sich, dass diese Aspekte auch eine Beschreibung des entsprechenden Verfahrens darstellen, sodass ein Block oder ein Bauelement einer Vorrichtung auch als ein entsprechender Verfahrensschritt oder als ein Merkmal eines Verfahrensschrittes zu verstehen ist. Analog dazu stellen Aspekte, die im Zusammenhang mit einem oder als ein Verfahrensschritt beschrieben wurden, auch eine Beschreibung eines entsprechenden Blocks oder Details oder Merkmals einer entsprechenden Vorrichtung dar. Einige oder alle der Verfahrensschritte können durch einen Hardware-Apparat (oder unter Verwendung eines Hardware-Apparats), wie zum Beispiel einen Mikroprozessor, einen programmierbaren Computer oder eine elektronische Schaltung ausgeführt werden. Bei einigen Ausführungsbeispielen können einige oder mehrere der wichtigsten Verfahrensschritte durch einen solchen Apparat ausgeführt werden.

Je nach bestimmten Implementierungsanforderungen können Ausführungsbeispiele der Erfindung in Hardware oder in Software implementiert sein. Die Implementierung kann unter Verwendung eines digitalen Speichermediums, beispielsweise einer Floppy-Disk, einer DVD, einer Blu-ray Disc, einer CD, eines ROM, eines PROM, eines EPROM, eines EEPROM oder eines FLASH-Speichers, einer Festplatte oder eines anderen magnetischen oder optischen Speichers durchgeführt werden, auf dem elektronisch lesbare Steuersignale gespeichert sind, die mit einem programmierbaren Computersystem derart zusammenwirken können oder zusammenwirken, dass das jeweilige Verfahren durchgeführt wird. Deshalb kann das digitale Speichermedium computerlesbar sein.

Manche Ausführungsbeispiele gemäß der Erfindung umfassen also einen Datenträger, der elektronisch lesbare Steuersignale aufweist, die in der Lage sind, mit einem programmierbaren Computersystem derart zusammenzuwirken, dass eines der hierin beschriebenen Verfahren durchgeführt wird.

Allgemein können Ausführungsbeispiele der vorliegenden Erfindung als Computerprogrammprodukt mit einem Programmcode implementiert sein, wobei der Programmcode dahingehend wirksam ist, eines der Verfahren durchzuführen, wenn das Computerprogrammprodukt auf einem Computer abläuft.

Der Programmcode kann beispielsweise auch auf einem maschinenlesbaren Träger gespeichert sein.

Andere Ausführungsbeispiele umfassen das Computerprogramm zum Durchführen eines der hierin beschriebenen Verfahren, wobei das Computerprogramm auf einem maschinenlesbaren Träger gespeichert ist.

Mit anderen Worten ist ein Ausführungsbeispiel des erfindungsgemäßen Verfahrens somit ein Computerprogramm, das einen Programmcode zum Durchführen eines der hierin beschriebenen Verfahren aufweist, wenn das Computerprogramm auf einem Computer abläuft.

Ein weiteres Ausführungsbeispiel der erfindungsgemäßen Verfahren ist somit ein Datenträger (oder ein digitales Speichermedium oder ein computerlesbares Medium), auf dem das Computerprogramm zum Durchführen eines der hierin beschriebenen Verfahren aufgezeichnet ist. Der Datenträger, das digitale Speichermedium oder das computerlesbare Medium sind typischerweise gegenständlich und/oder nicht-vergänglich bzw. nicht-vorübergehend.

Ein weiteres Ausführungsbeispiel des erfindungsgemäßen Verfahrens ist somit ein Datenstrom oder eine Sequenz von Signalen, der bzw. die das Computerprogramm zum Durchführen eines der hierin beschriebenen Verfahren darstellt bzw. darstellen. Der Datenstrom oder die Sequenz von Signalen kann bzw. können beispielsweise dahingehend konfiguriert sein, über eine Datenkommunikationsverbindung, beispielsweise über das Internet, transferiert zu werden.

Ein weiteres Ausführungsbeispiel umfasst eine Verarbeitungseinrichtung, beispielsweise einen Computer oder ein programmierbares Logikbauelement, die dahingehend konfiguriert oder angepasst ist, eines der hierin beschriebenen Verfahren durchzuführen.

Ein weiteres Ausführungsbeispiel umfasst einen Computer, auf dem das Computerprogramm zum Durchführen eines der hierin beschriebenen Verfahren installiert ist.

Ein weiteres Ausführungsbeispiel gemäß der Erfindung umfasst eine Vorrichtung oder ein System, die bzw. das ausgelegt ist, um ein Computerprogramm zur Durchführung zumindest eines der hierin beschriebenen Verfahren zu einem Empfänger zu übertragen. Die Übertragung kann beispielsweise elektronisch oder optisch erfolgen. Der Empfänger kann beispielsweise ein Computer, ein Mobilgerät, ein Speichergerät oder eine ähnliche Vorrichtung sein. Die Vorrichtung oder das System kann beispielsweise einen Datei-Server zur Übertragung des Computerprogramms zu dem Empfänger umfassen.

Bei manchen Ausführungsbeispielen kann ein programmierbares Logikbauelement (beispielsweise ein feldprogrammierbares Gatterarray, ein FPGA) dazu verwendet werden, manche oder alle Funktionalitäten der hierin beschriebenen Verfahren durchzuführen. Bei manchen Ausführungsbeispielen kann ein feldprogrammierbares Gatterarray mit einem Mikroprozessor zusammenwirken, um eines der hierin beschriebenen Verfahren durchzuführen. Allgemein werden die Verfahren bei einigen Ausführungsbeispielen seitens einer beliebigen Hardwarevorrichtung durchgeführt. Diese kann eine universell einsetzbare Hardware wie ein Computerprozessor (CPU) sein oder für das Verfahren spezifische Hardware, wie beispielsweise ein ASIC.

Die hierin beschriebenen Vorrichtungen können beispielsweise unter Verwendung eines Hardware-Apparats, oder unter Verwendung eines Computers, oder unter Verwendung einer Kombination eines Hardware-Apparats und eines Computers implementiert werden.

Die hierin beschriebenen Vorrichtungen, oder jedwede Komponenten der hierin beschriebenen Vorrichtungen können zumindest teilweise in Hardware und/oder in Software (Computerprogramm) implementiert sein.

Die hierin beschriebenen Verfahren können beispielsweise unter Verwendung eines Hardware-Apparats, oder unter Verwendung eines Computers, oder unter Verwendung einer Kombination eines Hardware-Apparats und eines Computers implementiert werden.

Die hierin beschriebenen Verfahren, oder jedwede Komponenten der hierin beschriebenen Verfahren können zumindest teilweise durch Hardware und/oder durch Software ausgeführt werden.

Die oben beschriebenen Ausführungsbeispiele stellen lediglich eine Veranschaulichung der Prinzipien der vorliegenden Erfindung dar. Es versteht sich, dass Modifikationen und Variationen der hierin beschriebenen Anordnungen und Einzelheiten anderen Fachleuten einleuchten werden. Deshalb ist beabsichtigt, dass die Erfindung lediglich durch den Schutzumfang der nachstehenden Patentansprüche und nicht durch die spezifischen Einzelheiten, die anhand der Beschreibung und der Erläuterung der Ausführungsbeispiele hierin präsentiert wurden, beschränkt sei.

## Patentansprüche

1. Verfahren (100) zur Clusterung von Detektionen in einem bildgebenden System, mit folgenden Schritten:
Erhalten (110) einer Mehrzahl von Frames (F1, F2, F3) zugehörig zu aufeinanderfolgenden Zeitpunkten (T1, T2, T3), wobei jedes Frame (F1, F2, F3) eine Vielzahl von Detektionen (V1, V2, V3, V1', V2', V3', V1", V2", V3") umfasst; wobei jede Detektion einer Position in einem Raum zugeordnet ist;
Erkennen (120) über die aufeinanderfolgenden Zeitpunkte (T1, T2, T3) einer paarweisen Kovarianz eines zeitlichen Verlaufes von zwei sich über die Zeit bewegenden Detektionen der Vielzahl von Detektionen (V1, V2, V3, V1', V2', V3', V1", V2", V3"), um je Paar von zeitlichen Verläufen zugeordnet zu den zwei sich über die Zeit bewegenden Detektionen über die aufeinanderfolgenden Zeitpunkte (T1, T2, T3) paarweise Kovarianzwerte zu erhalten;
Clustern (130) der Detektionen (V1, V2, V3, V1`, V2', V3', V1", V2", V3"), bei welchen ein zeitlicher Verlauf der paarweisen Kovarianzwerte des Paares einem vorgegebenen Muster entspricht.

2. Verfahren (100) gemäß Anspruch 1, wobei das Verfahren (100) den Schritt des Berechnens der Kovarianzmatrix des zeitlichen Verlaufes über die aufeinanderfolgenden Zeitpunkte (T1, T2, T3) von den Detektionen (V1, V2, V3, V1`, V2', V3', V1", V2", V3") beim Clustern (130) umfasst.

3. Verfahren (100) gemäß Anspruch 1 oder 2, wobei das vorgegebene Muster durch vorgegebene Schwellenwerte für den Kovarianzwert definiert ist; oder
wobei das vorgegebene Muster durch vorgegebene Schwellenwerte für den Kovarianzwert definiert ist und wobei die einzelnen Detektionen (V1, V2, V3, V1', V2', V3', V1", V2", V3") zu einem Cluster (C) geclustert werden, wenn der Kovarianzwert oberhalb eines vordefinierten Schwellwerts liegen.

4. Verfahren (100) gemäß einem der vorhergehenden Ansprüche, wobei die Kovarianzwerte innerhalb einer vorgegebenen Schwankungsbreite, insbesondere statistischen Schwankungsbreite, liegen und wobei der Kovarianzwert eine Schwankung der Positionen der zwei Detektionen beschreibt.

5. Verfahren (100) gemäß einem der vorhergehenden Ansprüche, wobei das vorgegebene Muster durch einen erwarteten Verlauf der Kovarianzwerte über die Zeit definiert ist.

6. Verfahren (100) gemäß einem der vorhergehenden Ansprüche, wobei der Kovarianzwert für zumindest zwei oder mehr Detektionen (V1, V2, V3, V1', V2', V3', V1", V2", V3") der Gruppe berechnet wird; oder
wobei ein weiterer Kovarianzwert für zumindest zwei oder mehr Detektionen (V1, V2, V3, V1', V2', V3', V1", V2", V3") der Gruppe oder einer weiteren Gruppe berechnet wird.

7. Verfahren (100) gemäß einem der vorhergehenden Ansprüche, wobei die zwei oder mehr Detektionen (V1, V2, V3, V1', V2', V3', V1", V2", V3") in Form von komplexen Sensorwerten oder komplexen Rückstrahlwerten vorliegen; oder
wobei die zwei oder mehr Detektionen (V1, V2, V3, V1', V2', V3', V1", V2", V3") in Form von komplexen Sensorwerten oder komplexen Rückstrahlwerten vorliegen, wobei die komplexen Sensorwerte oder komplexen Rückstrahlwerte jeweils durch eine Amplitude und Phase definiert sind.

8. Verfahren (100) gemäß einem der vorhergehenden Ansprüche, wobei das Verfahren (100) den Schritt des Normierens der jeweiligen Kovarianzwertes auf sich selbst umfasst.

9. Verfahren (100) gemäß einem der vorhergehenden Ansprüche, wobei das Verfahren (100) den Schritt des Bestimmens einer euklidischen Distanz zwischen zumindest zwei Detektionen (V1, V2, V3, V1`, V2', V3', V1", V2", V3") aufweist; oder
wobei das Verfahren (100) den Schritt des Bestimmens einer euklidischen Distanz zwischen zumindest zwei Detektionen (V1, V2, V3, V1`, V2', V3', V1", V2", V3") aufweist und wobei zumindest zwei Detektionen (V1, V2, V3, V1', V2', V3', V1", V2", V3") zu einer Gruppe geclustert werden, wenn die euklidische Distanz kleiner als ein Schwellenwert ist.

10. Verfahren (100) gemäß einem der vorhergehenden Ansprüche, wobei der Schritt des Clusterns (130) für ein erstes Cluster (C) durchgeführt wird und wobei der Schritt des Clusterns (130) für ein zweites Cluster (C) durchgeführt wird; und/oder
wobei ein erstes Cluster (C) einem ersten Objekt oder einer Objektgruppe zugeordnet ist.

11. Verfahren (100) zur Zusammenführung von einzelnen Detektionen zu einem Objekts mit den Schritten aus einem Verfahren (100) gemäß einem der Ansprüche 1 bis 10 sowie dem Schritt des Erkennens eines Clusters (C) als Objekt.

12. Verfahren (100) gemäß Anspruch 11, wobei das Verfahren den initialen Schritt des Empfangens von Radarsignalen als Sensorwerte zugehörig zu den Detektionen für die Mehrzahl von Frames (F1, F2, F3) umfasst.

13. Computerprogramm mit einem Programmcode zur Durchführung des Verfahrens (100) nach einem der Ansprüche 1 bis 11, wenn das Programm auf einem Computer abläuft.

14. Berechnungseinheit (28) zum Clustern (130) von Objekten mit einer Schnittstelle (32) und einem Prozessor (30),
wobei die Schnittstelle (32) ausgebildet ist, um eine Mehrzahl von Frames (F1, F2, F3) zugehörig zu aufeinanderfolgenden Zeitpunkten (T1, T2, T3) zu erhalten, wobei jedes Frame (F1, F2, F3) eine Vielzahl von Detektionen (V1, V2, V3, V1', V2', V3', V1", V2", V3") in einem bildgebenden System umfasst; wobei jede Detektion einer Position in einem Raum zugeordnet ist;
wobei der Prozessor (30) ausgebildet ist, über die aufeinanderfolgenden Zeitpunkte (T1, T2, T3) eine paarweisen Kovarianz eines zeitlichen Verlaufes von zwei sich über die Zeit bewegenden Detektionen der Vielzahl von Detektionen (V1, V2, V3, V1', V2', V3', V1", V2", V3")zu erkennen, um je Paar von zeitlichen Verläufen zugeordnet zu den zwei sich über die Zeit bewegenden Detektionen über die aufeinanderfolgenden Zeitpunkte (T1, T2, T3) paarweise Kovarianzwerte zu erhalten; und um Detektionenen (V1, V2, V3, V1', V2', V3', V1", V2", V3") zu clustern, bei welchen ein zeitlicher Verlauf der paarweisen Kovarianzwerte des Paares einem vorgegebenen Muster entsprechen.

15. Radarsystem (40), umfassend einen Radarempfänger oder eine Radarantenne sowie eine Berechnungseinheit (28) gemäß Anspruch 14.

16. Radarsystem, umfassend mehrere Sender und Empfänger sowie eine Berechnungseinheit (28) gemäß Anspruch 14, wobei Detektionen aus verschiedenen Messkanälen einander zugeordnet werden.

17. Fahrzeug, umfassend ein Radarsystem gemäß Anspruch 15 oder 16.

## Claims

1. Method (100) for clustering detections in an imaging system, comprising:
obtaining (110) a plurality of frames (F1, F2, F3) associated with successive points in time (T1, T2, T3), wherein each frame (F1, F2, F3) includes a plurality of detections (V1, V2, V3, V1', V2', V3', V1", V2", V3"); wherein each detection is associated with a position in a space;
identifying (120), over the successive points in time (T1, T2, T3), a pairwise covariance of a temporal progression of two detections of the plurality of detections (V1, V2, V3, V1', V2', V3', V1", V2", V3") moving over time, in order to obtain pairwise covariance values for each pair of temporal progressions associated with the two detections moving over time over the successive points in time (T1, T2, T3);
clustering (130) the detections (V1, V2, V3, V1', V2', V3', V1", V2", V3") for which a temporal progression of the pairwise covariance values of the pair corresponds to a predetermined pattern.

2. Method (100) according to claim 1, wherein the method (100) comprises calculating the covariance matrix of the temporal progression over the successive points in time (T1, T2, T3) from the detections (V1, V2, V3, V1', V2', V3', V1", V2", V3") when clustering (130).

3. Method (100) according to claim 1 or 2, wherein the predetermined pattern is defined by predetermined threshold values for the covariance value; or
wherein the predetermined pattern is defined by predetermined threshold values for the covariance value and wherein the individual detections (V1, V2, V3, V1', V2', V3', V1", V2", V3") are clustered into a cluster (C) if the covariance value is above a predefined threshold value.

4. Method (100) according to one of the preceding claims, wherein the covariance values are within a predetermined fluctuation range, in particular a statistical fluctuation range, and wherein the covariance value describes a fluctuation of the positions of the two detections.

5. Method (100) according to one of the preceding claims, wherein the predetermined pattern is defined by an expected progression of the covariance values over time.

6. Method (100) according to one of the preceding claims, wherein the covariance value is calculated for at least two or more detections (V1, V2, V3, V1', V2', V3', V1", V2", V3") of the group; or
wherein a further covariance value is calculated for at least two or more detections (V1, V2, V3, V1', V2', V3', V1", V2", V3") of the group or of a further group.

7. Method (100) according to one of the preceding claims, wherein the two or more detections (V1, V2, V3, V1', V2', V3', V1", V2", V3") are present in the form of complex sensor values or complex reflectance values; or
wherein the two or more detections (V1, V2, V3, V1', V2', V3', V1", V2", V3") are present in the form of complex sensor values or complex reflectance values, wherein the complex sensor values or complex reflectance values are each defined by an amplitude and phase.

8. Method (100) according to one of the preceding claims, wherein the method (100) includes the step of normalizing the respective covariance value to itself.

9. Method (100) according to one of the preceding claims, wherein the method (100) comprises determining a Euclidean distance between at least two detections (V1, V2, V3, V1', V2', V3', V1", V2", V3"); or
wherein the method (100) comprises determining a Euclidean distance between at least two detections (V1, V2, V3, V1', V2', V3', V1", V2", V3") and wherein at least two detections (V1, V2, V3, V1', V2', V3', V1", V2", V3") are clustered into a group if the Euclidean distance is less than a threshold value.

10. Method (100) according to one of the preceding claims, wherein clustering (130) is carried out for a first cluster (C) and wherein clustering (130) is carried out for a second cluster (C); and/or
wherein a first cluster (C) is associated with a first object or an object group.

11. Method (100) for merging individual detections into an object, comprising the steps of a method (100) according to any one of claims 1 to 10 and identifying a cluster (C) as an object.

12. Method (100) according to claim 11, wherein the method initially comprises receiving radar signals as sensor values associated with the detections for the plurality of frames (F1, F2, F3).

13. Computer program having a program code for carrying out the method (100) according to any one of claims 1 to 11 when the program runs on a computer.

14. Calculation unit (28) for clustering (130) objects, comprising an interface (32) and a processor (30),
wherein the interface (32) is configured to obtain a plurality of frames (F1, F2, F3) associated with successive points in time (T1, T2, T3), wherein each frame (F1, F2, F3) includes a plurality of detections (V1, V2, V3, V1', V2', V3', V1", V2", V3") in an imaging system; wherein each detection is associated with a position in a space;
wherein the processor (30) is configured to identify, over the successive points in time (T1, T2, T3), a pairwise covariance of a temporal progression of two detections of the plurality of detections (V1, V2, V3, V1', V2', V3', V1", V2", V3") moving over time, in order to obtain pairwise covariance values for each pair of temporal progressions associated with the two detections moving over time over the successive points in time (T1, T2, T3); and to cluster detections (V1, V2, V3, V1', V2', V3', V1", V2", V3") for which a temporal progression of the pairwise covariance values of the pair corresponds to a predetermined pattern.

15. Radar system (40), including a radar receiver or a radar antenna and a calculation unit (28) according to claim 14.

16. Radar system, including a plurality of transmitters and receivers and a calculation unit (28) according to claim 14, wherein detections from different measurement channels are associated with one another.

17. Vehicle, including a radar system according to claim 15 or 16.

## Revendications

1. Procédé (100) de regroupement de détections dans un système d'imagerie, aux étapes suivantes consistant à:
obtenir (110) une pluralité de trames (F1, F2, F3) associées à des moments successifs (T1, T2, T3), où chaque trame (F1, F2, F3) comporte une pluralité de détections (V1, V2, V3, V1', V2', V3', V1", V2", V3"); où chaque détection est associée à une position dans un espace;
détecter (120), pendant les moments successifs (T1, T2, T3), une covariance par paire d'une évolution dans le temps de deux détections se déplaçant dans le temps parmi la pluralité de détections (V1, V2, V3, V1', V2', V3', V1", V2", V3"), pour obtenir, par paire d'évolutions dans le temps associées aux deux détections se déplaçant dans le temps pendant les moments successifs (T1, T2, T3), des valeurs de covariance par paire;
regrouper (130) les détections (V1, V2, V3, V1', V2', V3', V1", V2", V3") dans lesquelles une évolution dans le temps des valeurs de covariance par paire de la paire correspond à un modèle prédéterminé.

2. Procédé (100) selon la revendication 1, dans lequel le procédé (100) comporte l'étape consistant à calculer la matrice de covariance de l'évolution dans le temps pendant les moments successifs (T1, T2, T3) à partir des détections (V1, V2, V3, V1', V2', V3', V1", V2", V3") lors du regroupement (130).

3. Procédé (100) selon la revendication 1 ou 2, dans lequel le modèle prédéterminé est défini par les valeurs de seuil prédéterminées pour la valeur de covariance; ou
dans lequel le modèle prédéterminé est défini par des valeurs de seuil prédéterminées pour la valeur de covariance et dans lequel les détections individuelles (V1, V2, V3, V1', V2', V3', V1", V2", V3") sont regroupées pour obtenir un regroupement (C) lorsque la valeur de covariance est supérieure à une valeur de seuil prédéfinie.

4. Procédé (100) selon l'une des revendications précédentes, dans lequel les valeurs de covariance se situent dans une plage de fluctuation prédéterminée, en particulier une plage de fluctuation statistique, et dans lequel la valeur de covariance décrit une fluctuation des positions des deux détections.

5. Procédé (100) selon l'une des revendications précédentes, dans lequel le modèle prédéterminé est défini par une évolution attendue des valeurs de covariance au cours du temps.

6. Procédé (100) selon l'une des revendications précédentes, dans lequel la valeur de covariance est calculée pour au moins deux détections ou plus (V1, V2, V3, V1', V2', V3', V1", V2", V3") du groupe; ou
dans lequel une autre valeur de covariance est calculée pour au moins deux détections ou plus (V1, V2, V3, V1', V2', V3', V1", V2", V3") du groupe ou d'un autre groupe.

7. Procédé (100) selon l'une des revendications précédentes, dans lequel les deux ou plusieurs détections (V1, V2, V3, V1', V2', V3', V1", V2", V3") sont présentes sous forme de valeurs de capteur complexes ou des valeurs de rétro-réflexion complexes; ou
dans lequel les deux ou plusieurs détections (V1, V2, V3, V1', V2', V3', V1", V2", V3") sont présentes sous forme de valeurs de capteur complexes ou de valeurs de rétro-réflexion complexes, dans lequel les valeurs de capteur complexes ou les valeurs de rétro-réflexion complexes sont définies, chacune, par une amplitude et une phase.

8. Procédé (100) selon l'une des revendications précédentes, dans lequel le procédé (100) comporte l'étape consistant à normaliser la valeur de covariance respective elle-même.

9. Procédé (100) selon l'une des revendications précédentes, dans lequel le procédé (100) présente l'étape consistant à déterminer une distance euclidienne entre au moins deux détections (V1, V2, V3, V1', V2', V3', V1", V2", V3"); ou
dans lequel le procédé (100) présente l'étape consistant à déterminer une distance euclidienne entre au moins deux détections (V1, V2, V3, V1', V2', V3', V1", V2", V3") et dans lequel au moins deux détections (V1, V2, V3, V1', V2', V3', V1", V2", V3") sont regroupées pour obtenir un groupe lorsque la distance euclidienne est inférieure à une valeur de seuil.

10. Procédé (100) selon l'une des revendications précédentes, dans lequel l'étape de regroupement (130) est réalisée pour un premier regroupement (C) et dans lequel l'étape de regroupement (130) est réalisée pour un deuxième regroupement (C); et/ou
dans lequel un premier regroupement (C) est associé à un premier objet ou à un groupe d'objets.

11. Procédé (100) de fusion de détections individuelles relatives à un objet aux étapes consistant en un procédé (100) selon l'une des revendications 1 à 10 et en l'étape de détection d'un regroupement (C) comme objet.

12. Procédé (100) selon la revendication 11, dans lequel le procédé comporte l'étape initiale consistant à recevoir des signaux de radar comme valeurs de capteur associées aux détections pour la pluralité de trames (F1, F2, F3).

13. Programme informatique avec un code de programme pour mettre en oeuvre le procédé (100) selon l'une des revendications 1 à 11 lorsque le programme est exécuté sur un ordinateur.

14. Unité de calcul (28) destinée à regrouper (130) des objets avec une interface (32) et un processeur (30),
dans laquelle l'interface (32) est conçue pour obtenir une pluralité de trames (F1, F2, F3) associées à des moments successifs (T1, T2, T3), dans laquelle chaque trame (F1, F2, F3) comporte une pluralité de détections (V1, V2, V3, V1', V2', V3', V1", V2", V3") dans un système d'imagerie; dans laquelle chaque détection est associée à une position dans un espace;
dans laquelle le processeur (30) est conçu pour détecter au cours des moments successifs (T1, T2, T3) une covariance par paire d'une évolution dans le temps de deux détections se déplaçant dans le temps parmi la pluralité de détections (V1, V2, V3, V1', V2', V3', V1", V2", V3"), pour obtenir par paire d'évolutions dans le temps associées aux deux détections se déplaçant dans le temps au cours des moments successifs (T1, T2, T3), des valeurs de covariance par paire; et pour regrouper les détections (V1, V2, V3, V1', V2', V3', V1", V2", V3") pour lesquelles une évolution dans le temps des valeurs de covariance par paire de la paire correspond à un modèle prédéterminé.

15. Système de radar (40), comportant un récepteur de radar ou une antenne de radar et une unité de calcul (28) selon la revendication 14.

16. Système de radar, comportant plusieurs émetteurs et récepteurs ainsi qu'une unité de calcul (28) selon la revendication 14, dans lequel les détections de différents canaux de mesure sont associées l'une à l'autre.

17. Véhicule, comportant un système de radar selon la revendication 15 ou 16.
